(19) **Europäisches Patentamt**

**European Patent Office**

**Office européen des brevets**

(11) **EP 1 058 328 A2**

(12) **EUROPEAN PATENT APPLICATION**

(43) Date of publication:
06.12.2000 Bulletin 2000/49

(51) Int. Cl.$^7$: **H01M 8/06**

(21) Application number: **00109369.9**

(22) Date of filing: **02.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.06.1999 US 323465**

(71) Applicant:
**General Motors Corporation
Detroit, Michigan 48265-3000 (US)**

(72) Inventors:
- **Yu, Taichiang P.
Rochester, New York 14623 (US)**
- **Schoeneweiss, Michael R.
Henrietta, New York 14467 (US)**

(74) Representative:
**Manitz, Finsterwald & Partner
Postfach 22 16 11
80506 München (DE)**

(54) **Water-gas shift reactor warm-up**

(57) Shortening the warm-up time of a water-gas-shift reactor by injecting oxygen throughout its catalyst bed as the reactor is heating up. The oxygen reacts exothermically with CO in the input gas to the reactor to generate heat that supplements the external heat put into the reactor.

FIG. 2

**Description**

TECHNICAL FIELD

The present invention relates to a technique for accelerating the warm-up of a water-gas shift reactor in a PEM fuel cell system.

BACKGROUND OF THE INVENTION

Fuel cells electrochemically produce electricity from reactants supplied externally thereto, and have been proposed for many applications including electrical vehicular power plants to replace, or supplement, internal combustion engines. Hydrogen is often used as the fuel, and is supplied to the fuel cell's anode. Oxygen (as air) is used as the oxidant and is supplied to the cell's cathode. For vehicular applications, the hydrogen fuel cell may be derived from liquid hydrocarbon fuels (e.g., methanol or gasoline) in a catalytic fuel processing reactor. For example, in the case of methanol, methanol and water (vapors) are reacted under isothermal conditions in a catalytic reactor known as a steam reformer that generates hydrogen and carbon dioxide according to the following ideal endothermic reaction:

$$CH_3OH+H_2O \rightarrow CO_2+3H_2$$

This reaction is carried out within a steam reformer that is heated by exhaust gases from a methanol-fired and/or hydrogen-fired combuster, and actually yields a reformate gas comprising hydrogen, carbon dioxide, carbon monoxide, and water. One such reformer is described in U. S. Patent No. 4,650,727 to Vanderborgh, and one such combuster is described in copending United States patent applications U. S. Serial Nos. 08/975,422 and 08/980087 filed in the name of William Pettit in November 1997, and assigned to General Motors Corporation, assignee of the present invention. Unfortunately, the reformate/effluent exiting the reformer contains untoward amounts of carbon monoxide that is toxic to the catalyst in the fuel cell and must be removed, or at least reduced to very low concentrations (i.e., less than about 0.00005 mole fraction).

It is known that the carbon monoxide, CO, content of the reformate can be reduced by the so-called "water-gas shift" reaction that can either take place within the reformer itself (depending on the operating conditions of the reformer), or, more typically, in one or more separate shift reactors located downstream from the reformer. In the water-gas shift reaction, water (i.e., steam) reacts with the carbon monoxide in the reformate according to the following ideal exothermic shift reaction:

$$CO+H_2O \rightarrow CO_2+H_2$$

In one known arrangement, a first shift reactor (i.e., in a two-reactor series) is a high-temperature, adiabatic shift reactor in which the reformate enters at a first temperature and exits at a somewhat higher temperature. Thereafter, the reformate is cooled and enters a second shift reactor which is an isothermal, low temperature shift reactor in which the inlet and output temperatures of the reformate is essentially the same. Shift reactor(s) comprise(s) a housing containing a catalyst bed through which the reformate flows, and to which steam is added. The high temperature shift reactors operate at about 350°C - 450°C and typically use a non-noble metal catalyst such as a mixture of $Fe_3 O_4$ and $Cr_2 O_3$ (i.e., about 55 wt % Fe and 6% Cr). The low temperature shift reactors, on the other hand, operate at about 200°C - 260°C, and use a non-noble metal catalyst such as $Cu-ZnO-Al_2O_3$, or $Cu-ZnO-Cr_2O_3$.

Some CO still survives the water-gas shift reaction and its concentration needs to be reduced even further (i.e., below 0.00005 mole fraction) before the reformate can be used in the fuel cell without poisoning the fuel cell catalyst. It is known to further reduce the CO content of $H_2$-rich reformate exiting a shift reactor by selectively reacting it with air at a temperature of about 210°C - 260°C in a so-called "PrOx" (i.e., preferential oxidation) reaction that is carried out in PrOx reactor with a noble metal catalyst. In the PrOx reactor, the air preferentially oxidizes the CO, in the presence of the $H_2$, but without consuming/oxidizing substantial quantities of the $H_2$. The PrOx reaction is exothermic and proceeds as follows:

$$CO+1/2O_2 \rightarrow CO_2$$

When the system reaches steady state and the CO level is low enough, the PrOx reactor effluent is supplied to the fuel cell. Before the CO level is low enough, the PrOx effluent is shunted round the fuel cell for temporary use elsewhere in the system.

One of the requirements for a vehicular fuel cell power plant system is the need to start-up the system quickly from a shutdown condition. This requires that the operating temperatures of the system's various components, and the quality (i.e., low CO content) of the $H_2$ fuel stream fed to the fuel cell, be quickly achieved so that the vehicle is available for use in a very short time period. The water-gas-shift reactor is generally quite large, contains a significant amount of catalyst, and is heated externally to bring it up to temperature. As a result, it takes quite a while for the water-gas-shift reactor to come up to its preferred superambient operating temperature during start-up of the fuel cell system.

SUMMARY OF THE INVENTION

The present invention contemplates a technique for accelerating (1) the rate at which a low temperature, water-gas-shift reactor is brought up to its operating temperature following shutdown of the fuel cell system in which it is used, as well as (2) the rate at which the shift reactor can be brought to the point where it provides low-CO-content $H_2$-rich fuel gas to the PrOx reactor. More specifically, the present invention contemplates process and apparatus for injecting a small amount of oxygen throughout the catalyst bed of a water-gas-shift reactor while the water-gas-shift reactor warms up to its normal operating temperature during the startup of a fuel cell system. The injected $O_2$ exothermically reacts with the CO in the $H_2$-rich fuel gas (1) to generate heat within the catalyst bed that accelerates warm up thereof, and (2) to consume some of the undesirable CO so that the shift reactor's outlet gas during warm-up has a lower CO content than if the $O_2$ were not so injected.

SUMMARY OF THE INVENTION

The present invention relates to a fuel cell system comprising a PEM fuel cell for electrochemically reacting an hydrogen-rich fuel gas stream with oxygen (i.e., from air) to produce electricity. The hydrogen-rich fuel/gas stream supplied to the fuel cell has a sufficiently low concentration of carbon monoxide as to be tolerable by the fuel cell (i.e., less than about 0.00005 mole fraction, or 50 ppm). The fuel gas stream is produced from a liquid hydrocarbon (e.g., methanol or gasoline) in a first catalytic reactor (e.g. a steam reformer) located upstream of the fuel cell. The output from the first reactor has a concentration of carbon monoxide that is too high to be used in the fuel cell. A low temperature water-gas-shift shift reactor is therefore positioned intermediate the first catalytic reactor and the fuel cell and serves to reduce higher carbon monoxide concentrations exiting the first catalytic reactor to a lower level closer to that tolerable by the fuel cell. The low temperature water-gas-shift reactor may, or may not, be preceded by a high temperature shift reactor. Each shift reactor comprises a housing encasing a catalyst bed that promotes the reaction between steam and the carbon monoxide in the fuel gas exiting the first reactor at a superambient operating temperature established for the reactor to most efficiently promote the reaction when the shift reactor is operating under normal operating conditions.

In accordance with the present invention, the low temperature shift reactor is equipped with an oxygen distributor that comprises a manifold having a plurality of outlets distributed throughout the catalyst bed for admitting oxygen to the catalyst at a plurality of sites throughout the catalyst during warm-up of the shift reactor to its normal operating temperature. When used, a high temperature shift reactor may be similarly equipped with an oxygen distributor of its own. The oxygen exothermically reacts with some of the carbon monoxide (and hydrogen as well) in the fuel gas passing through the catalyst bed to assist in heating-up the catalyst to its normal superambient operating temperature, and to further reduce carbon monoxide concentration in the reformate passing through the shift reactor during system warm-up.

Another aspect of the invention involves a process for warming-up a fuel cell system to its normal operating temperature, which system includes: (1) an hydrogen-fueled PEM fuel cell; (2) a catalytic reactor upstream of the fuel cell that, under normal operating conditions, produces a hydrogen-containing fuel gas stream from a liquid hydrocarbon for fueling the fuel cell, which stream is contaminated with a first concentration of carbon monoxide that is too high for the fuel cell to tolerate; and (3) at least one shift reactor intermediate the catalytic reactor and the fuel cell for reducing the concentration of the carbon monoxide in the fuel gas stream to a second concentration less than the first concentration when the system is operating under normal operating conditions. The shift reactor(s) comprise(s) a housing encasing a catalyst bed for reacting the carbon monoxide in the fuel gas stream with water (i.e. steam) at a superambient operating temperature established for the most effective use of the catalyst when the system is operating under normal operating conditions. In accordance with this process aspect of the invention, the fuel cell system is warmed-up by the concurrent steps of: (a) warming-up the catalytic reactor to its normal operating temperature; (b) generating the hydrogen-rich fuel gas stream in the catalytic reactor as it warms up, which stream, during warm-up, is contaminated with a third concentration of carbon monoxide greater than the first concentration; (c) passing the stream from the catalytic reactor through the catalyst bed(s) in the shift reactor(s) while heating-up the catalyst bed to its most effective superambient operating temperature; (d) injecting a small, but sufficient, amount of oxygen (preferably as air) throughout the catalyst bed(s) in the shift reactor(s) as the bed(s) warms up (i) to exothermically react the oxygen with some of the carbon monoxide in the stream and thereby assist in the warm-up of the catalyst bed and (ii) to reduce the carbon monoxide concentration in the stream passing through the shift reactor(s).

DESCRIPTION OF THE DRAWINGS

The invention will be better understood when considered in the light of the following detailed description of a representative embodiment thereof which is given hereafter in conjunction with the several drawings in which:

Figure 1 is a schematic of a PEM fuel cell system;
Figure 2 schematically illustrates a side section view through a low temperature, water-gas-shift reactor in accordance with the present invention;

Figure 3 is a graph showing the comparative effect of oxygen injection on the temperature of the output gas from a low temperature water-gas-shift reactor during warm-up; and

Figure 4 is a graph showing the comparative effect of oxygen injection on the carbon monoxide concentration in the output gas from a low temperature water-gas-shift reactor during warm-up.

## DESCRIPTION OF THE PREFERRED EMBODIMENT

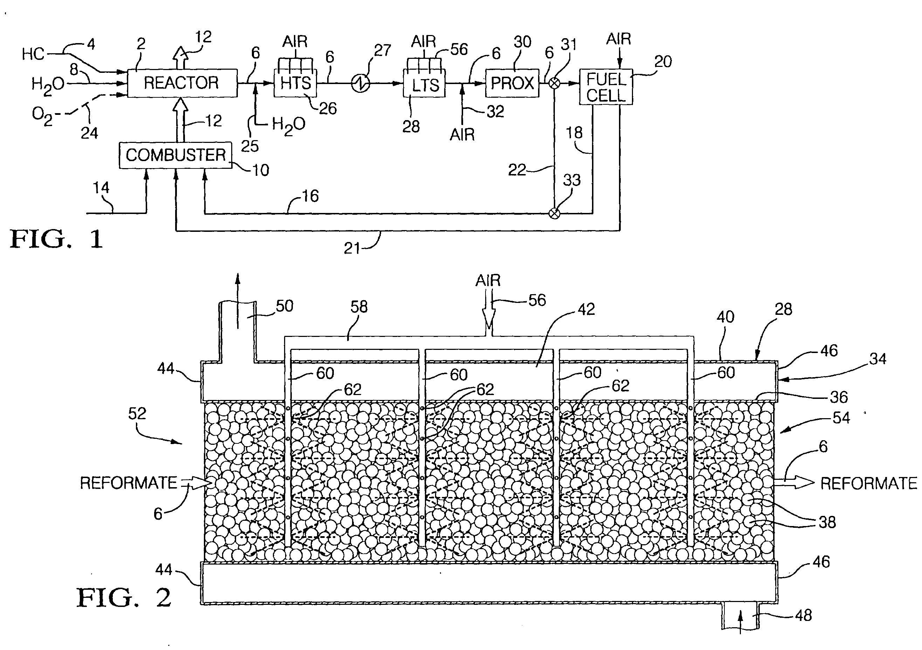

Figure 1 depicts a simplified vehicle fuel cell system in accordance with the present invention. A fuel reactor 2 comprises a catalytic reactor that converts a liquid hydrocarbon fuel (e.g. methanol or gasoline) 4 into a fuel stream 6 comprising principally hydrogen, carbon dioxide and water as well as an undesirable amount of carbon monoxide that would be detrimental to the fuel cell if allowed to persist. When the hydrocarbon is methanol, the fuel reactor 2 may be a steam reformer, well known in the art, that catalytic reacts the methanol 4 with steam 8 to produce a fuel steam 6, often referred to as "reformate". The steam reforming reaction is endothermic, and requires external heat which is often obtained from the exhaust gases 12 of a combuster (flame or catalytic) 10 that is fueled by methanol 14 from the vehicle's fuel tank and/or hydrogen 16 supplied either (1) from the exhaust 18 from fuel cell 20, or (2) from a fuel cell bypass loop 22 during start-up of the system. One such combuster is shown in Pettit, *supra*. When the hydrocarbon is gasoline, the fuel reactor 2 may be (1) a steam reformer, (2) a partial oxidation (POX) reactor that reacts the gasoline with oxygen 24 (from air), or (3) a combination of both a partial oxidation reactor and steam reformer which is known in the art as an auto-thermal reformer. The $O_2$ input 24 to the reactor 2 is shown in dashed line as being optional if, but useful when, a POX reactor is used ahead of the reformer. Regardless of what form the fuel reactor 2 may take, the fuel stream 6 produced thereby contains carbon monoxide levels that are toxic to the catalysts used in the fuel cell 20. Accordingly, the carbon monoxide must be removed or its concentration lowered.

It is common practice to remove much of the carbon monoxide from the fuel gas stream 6 exiting the fuel reactor 2 by subjecting it to a water-gas-shift reaction where the stream 6 is catalytically reacted with water (i.e. as steam) 25 to form more $CO_2$ and $H_2$. The water-gas-shift reaction may be accomplished in a single shift reactor, or often in a two stage shift reactor wherein the fuel stream 6 first passes through a high temperature shift reactor (HTS) 26, and thence through a low temperature shift reactor (LTS) 28. By high temperature shift reactor is meant an adiabatic shift reactor having a catalyst operable to effect the water-gas shift reaction about 350°C - 450°C, i.e., oxide, Fe or chromium oxide catalysts. By low temperature shift reactor is meant an isothermal shift reactor having a catalyst operable to effect the water-gas shift reaction at about 200°C - 260°C, i.e. Cu-ZnO catalysts. A heat exchanger 27 cools the reformate 6 exiting the high temperature shift reactor 26 before it enters the low temperature shift reactor 28. As the fuel stream 6 exiting the shift reaction is still too rich in carbon monoxide to be used directly in the fuel cell 20, it is common practice to subject the fuel stream 6 exiting the shift reaction(s) to a preferential oxidation (PrOx) reaction in a PrOx reactor 30 wherein a limited amount of air 32 is selectively, exothermically reacted with the carbon monoxide, rather than the hydrogen, over a suitable catalyst that promotes such selectivity. When the system is operating under normal steady state conditions, the fuel stream 6 exiting the PrOx reactor 30 is sufficiently CO-free (i.e. less than about .00005 mole fraction CO) that it can be used in the fuel cell 20 without poisoning the catalyst, and is routed to the anode side of the fuel cell 20. Hydrogen which is not consumed in the fuel cell 20 is routed to the combuster 10 via lines 16 and 18 for burning therein. During system warm-up however, and before the fuel stream 6 leaving the PrOx reactor 30 has an acceptably low CO content, the PrOx outlet gases 6 are shunted around the fuel cell 20 to the combuster 10 by means of line 22, line 16 and coacting 2-way valves 31 and 33. Cathode exhaust gases (i.e. oxygen-depleted air) are routed to the combuster 10 via conduit 21 to burn along with the hydrogen therein.

For vehicular applications (i.e. motive power for electric vehicles) there is a consumer requirement that the vehicle start-up, and be ready for operation, in a very short time period. Ideally, this time period would be no longer than it now takes to start an internal combustion engine. Unfortunately, fuel cell systems are complex chemical plants that include a number of different chemical reactors of different sizes (a) that have different operating temperatures and warm-up times, and (b) that are heated by different means. The present invention focuses on shortening the warm-up time of the water-gas-shift reactor(s). In accordance with the present invention, warm-up of the system's shift reactors is accelerated by injecting enough oxygen (preferably as air) throughout its catalyst bed to exothermically react the oxygen with some of the CO in the fuel stream and thereby assist the external heating means in bringing the shift reactor up to its normal superambient operating temperature. More specifically and as best illustrated by, and shown in, Fig 2, a low temperature shift reactor 28 comprises a housing 34 having an inner wall 36 encasing a bed of catalyst beads 38. The inner wall 36 is surrounded by an outer wall 40 spaced apart from the inner wall 36 so as to provide a heating chamber 42 that is closed off at its ends by walls 44 and 46. A suitable liquid heating medium (e.g. oil) is circulated through the heating chamber 42 between an inlet 48 and an outlet 50 to warm-up the low temperature shift reactor 28 during start-up of the fuel cell system, and thereafter maintain its operating temperature substantially constant from the inlet end 52, where the reformate/fuel stream 6 enters the reactor 28, to the exhaust end 54, where the reformate/fuel stream 6 exits the reactor 28. During warm-up and with the heating medium circulating through the heating chamber 42, a small amount of oxygen 56 (e.g. air) is injected substantially uniformly throughout the bed of catalyst beads 38. The same is true for the high temperature shift reactor 26, if desired. The oxygen reacts exothermically with some of the CO in the fuel stream 6, and in so doing, substantially heats the beads 38. Distributing the $O_2$ throughout the bed of beads 38 (and comparable beads in reactor 26), avoids the creation of any "hot spots" in the bed as might occur if all the oxygen were injected at a single point. To this end, the shift reactor 28 includes an oxygen manifold 58 that has a plurality of injectors 60 that may take the form of perforated tubes, projecting into the bed of beads 38. The injectors 60 include a plurality of tiny apertures 62 through which the oxygen is injected into the bead bed. The precise structure of the injectors is not critical so long as they distribute the $O_2$ substantially evenly throughout the bed. Hence, they may comprise perforated tubes 60 such as shown in Fig 2, or could comprise a plurality of spaced apart, hollow panels extending in the direction of reformate flow through the shift reactor 28, which panels are perforated on both sides to disperse the air into catalyst beads residing in the gaps between the spaced apart panels.

The amount of heat generated by the $O_2$ + CO reaction is a function of how much CO is present. The reaction itself generates 67635 cal/mole of heat. The amount of $O_2$ injected is not particularly critical, except that there must be enough oxygen added to the reaction to provide sufficient heat to do the job (i.e. too little $O_2$ yields too little heat to be worthwhile), and too much oxygen could over-heat and damaged the catalyst. In this later regard, the oxygen will preferably be added at a rate not to exceed about 0.1 moles/min. of oxygen for each mole/min. of carbon monoxide entering into the shift reactor near the beginning of the warm-up period to insure there is no overheating. In this regard, the amount of CO entering the shift reactor varies from a high concentration near the beginning of the warm-up period when the fuel processor is cold, and its efficiency low, to a lesser concentration near the end of the warm-up period when the fuel processor is warmed-up. Hence, most of the exothermic heating, and risk of catalyst damage, occurs near the beginning of the warm-up period.

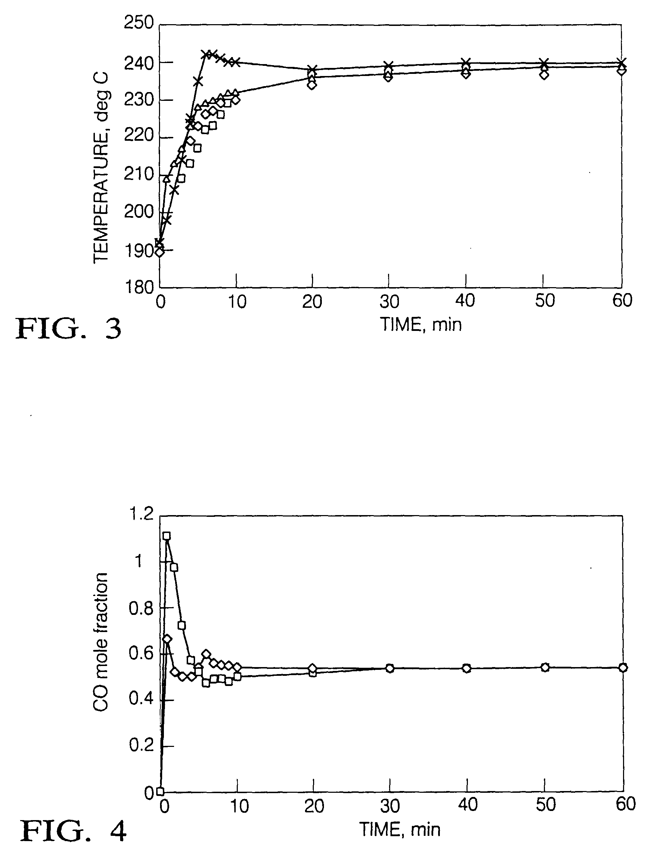

Figures 3 and 4 show the results of one test wherein simulated reformate gas comprising by volume 26.45% $H_2$, 6.9% $CO_2$, 10.82% CO, 25.57% $H_2O$, and the balance $N_2$ was initially flowed through a low temperature shift reactor at a rate of .03 mole of CO per min. The shift reactor comprised a one inch (1") diameter stainless steel tubular reactor 20 inches long, having a ten inch (10") long catalyst bed filled with 5mmX3mm pellets of a catalyst comprising Cu + ZnO. Four (4) needle-like injectors having one sixteenth inch (1/16") openings at their ends were spaced two inches (2") apart along a common manifold and extended into the center of the catalyst bed. Thermocouples were positioned at the inlet and the outlet of the reactor. The reactor was mounted vertically in an oven for supplying heat to the reactor during start-up and normal operation of the reactor. The simulated reformate flowed downwardly through the reactor. The reactor was initially heated up to 190°C, and thereafter warmed-up at a rate of 10°C/min until a temperature of 230°C was reached (i.e. the normal steady state operating temperature of the reactor). When the reactor reached 190°C, air was supplied to the catalyst via the injectors at a rate of 0.014 mole/min and the simulated reformate was supplied to the catalyst at a rate of 0.286 mole/min so that the $O_2$ comprised 1% of the $O_2$ + reformate mixture.

To obtain the data shown in Fig 3, the temperature of the gas entering and exiting the reactor was measured using the thermocouples at each end of the reactor. The curve identified by diamonds (♦) shows the inlet temperatures of the gas at different times during the warm-up period without oxygen injection. The curve identified by squares (□) shows the outlet temperatures of the gas at different times during the warm-up period without oxygen injection. The curve identified by triangles (△) shows the inlet temperatures at different times during the warm-up period with oxygen injection according to the present invention. The curve identified by crosses (×) shows the outlet temperatures at different times into the warm-up period with oxygen injection according to the present invention. Figure 3 shows that the temperatures of the outlet gases when oxygen was injected into the reactor are higher than the other three temperatures measured throughout the warm-up period, and significantly higher than the other temperatures during the first twenty minutes of warm-up.

To obtain the data shown in Fig 4, the composition of the gas exiting the shift reactor was measured by gas chomotography. The curve identified by squares (□) shows the outlet CO concentration at different times during the warm-up process without oxygen injection. The curve identified by diamonds (♦) shows the outlet CO concentrations at different times during the warm-up process with oxygen injection according to the present invention. Fig. 4 shows that the outlet CO concentration was significantly less in the early stages of warm-up when oxygen is injected into the catalyst bed of the shift reactor.

While the invention has been described in terms of specific embodiments thereof, it is not intended to be limited thereto, but rather only to the extent set forth hereafter in the claims which follow.

**Claims**

1. In a fuel cell system comprising a fuel cell for electrochemically reacting a hydrogen-rich stream with oxygen to produce electricity, said hydrogen-rich stream having a first concentration of carbon monoxide tolerable by said fuel cell, a first reactor upstream of said fuel cell for producing a hydrogen-rich fuel stream having a second concentration of carbon monoxide greater than said first concentration, and a water-gas shift reactor intermediate said catalytic reactor and said fuel cell for reducing said second concentration to a third concentration of carbon monoxide closer to said first concentration, said water-gas shift reactor comprising a housing encasing a catalyst bed for reacting the carbon monoxide in said water-gas shift reactor with water at a superambient operating temperature established for the most effective use of said catalyst bed, the improvement comprising an oxygen distributor comprising a manifold having a plurality of outlets in said catalyst bed for admitting oxygen at a plurality of sites throughout said bed during system warm-up to exothermically react said oxygen with said carbon monoxide in said water-gas shift reactor and thereby assist in heating said bed up to said superambient operating temperature during said system warm-up.

2. A process for accelerating the warm-up of a water-gas-shift reactor in a fuel cell system wherein said system includes a reformer upstream from said shift reactor for generating hydrogen-rich, carbon-monoxide-contaminated reformate for fueling said fuel cell, and said water-gas-shift reactor comprises a catalyst operable at a particular superambient temperature to efficiently react some of said carbon monoxide in said reformate with steam to form carbon dioxide and hydrogen, said method comprising the steps of:

a) injecting oxygen throughout said catalyst as said catalyst is being heated-up to said particular superambient temperature to exothermically react said oxygen with some of said carbon monoxide in said reformate and thereby (i) assist in heating said catalyst to said superambient temperature and (ii) reduce the carbon monoxide concentration in said reformate.

3. The process of warming up a fuel cell system to its normal operating temperature, said system including (1) a hydrogen-fueled fuel cell, (2) a reformer upstream of the fuel cell for producing a hydrogen-containing stream from a hydrocarbon for fueling said fuel cell, said stream being contaminated with a first concentration of carbon monoxide under normal operating conditions, and (3) a water-gas shift reactor intermediate said reformer and said fuel cell for reducing the concentration of said carbon monoxide in said stream to a second concentration less than said first concentration under normal operating conditions, said water-gas shift reactor comprising a housing encasing a catalyst bed for reacting the carbon monoxide in said stream with water at a superambient operating temperature established for said catalyst bed, said process comprising the concurrent steps of:

a) warming-up the reformer to its normal operating temperature;
b) generating said stream in said reformer as it warms up, said stream being contaminated with a third concentration of carbon monoxide greater than said first concentration during said warming-up; c) passing said stream from said reformer through said catalyst bed in said water-gas shift reactor while heating-up said catalyst bed to said superambient operating temperature;
d) injecting a sufficient amount of oxygen throughout said catalyst bed to exothermically react with said carbon monoxide in said stream to assist said heating-up of said bed and to reduce the carbon monoxide concentration in said stream passing through said water-gas shift reactor; and
e) ceasing said injecting after said catalyst bed has substantially reached its normal operating temperature.

4. The method according to claim 3 wherein said oxygen is injected as air.

5. The method according to claim 4 wherein the stream exiting said water-gas shift reactor is shunted around said fuel cell until the carbon monoxide concentration of said stream at the inlet to said fuel cell is at a level tolerable by said fuel cell, at which time said stream is rerouted through said fuel cell.

6. The method according to claim 3 wherein said oxygen is injected at a rate not to exceed about 0.1 moles/min for each mole/min of CO flowing into said catalyst bed.

FIG. 1

FIG. 2

FIG. 3

FIG. 4